# EUROPEAN PATENT APPLICATION

(11) **EP 1 748 668 A1**
(43) Date of publication of application: **31.01.2007**
(21) Application number: 05743668.5
(22) Date of filing: 19.05.2005
(51) Int. Cl.: H04Q 7/38

(54) **METHOD AND DEVICE FOR CONTROLLING COMMUNICATION MODE OF MOBILE COMMUNICATION TERMINAL**

(30) Priority: 19.05.2004 FR 0450998
(71) Applicant: Ueki, Makoto c/o Nec Corporation, Minato-ku, Tokyo 108-8001 (JP)
(72) Inventor: DEPRUN, Jean, Francois, 75010 (FR)
(74) Representative: Betten, Jürgen
(86) International application number: PCT/JP2005/009580
(87) International publication number: WO 2005/112502

(57) **Abstract**

The present invention relates to the field of telecommunication and concerns a method and a device that prevent a multimedia mobile terminal, capable of utilizing videophone calls, from transmitting or receiving a videophone call in a certain situation.

## Description

### Field of the Invention

The present invention relates to the field of telecommunication and concerns a method and a device that is able to prevent a mobile multimedia terminal, capable of utilizing videophone calls, from transmitting or receiving a videophone call in a certain situation.

### Description of the Related Art

It is prepared by certain norms and networks of telecommunications, for example, by the norm and mobile network of the third generation (3G), that a user carrying an appropriate multimedia terminal can communicate by videophone or visiophone with another user who also carries multimedia terminal. The communication that permits simultaneous usage of several types of digital data (image and sound) is likely to monopolize the attention of either one of users. Therefore, in certain situations, this mode of communication appears inappropriate or dangerous, for example, when one of the users drives a car.

There arises the problem to find a system that prevents the terminal, capable of transmitting and receiving communications by videophone, from communications by depriving partially or totally of this function in a certain situation.

### SUMMARY OF THE INVENTION

The present invention concerns at first a method for processing the modes of communications of the first mobile communication terminal, capable of exchanging the data with other communication terminals according to one or several cellular communication norms comprising steps of:
a) detecting the simultaneous presence of the first mobile communication terminal and an exterior trigger device, and
b) disactivating at least one communication mode of the first terminal depending upon the detection made at least during step a).

The present invention can be applied for example to multimedia terminals, capable of performing communications according to one or several cellular communication norms of the 3rd generation.

The exterior trigger device can be capable of communicating with the first terminal according to one or several wireless communication norms or standards that are different from the above-described cellular communication, for example, a communication standard or a norm chosen from one of the following communication norms or standards: IEEE 802.11a, IEEE 802.11b (WiFi), Bluetooth, Home RF, Hiperlan, IrDA, contactless smart cards.

Step a) can be the detection of presence or localization of communication terminal performed by the trigger device or the detection of presence or localization of the trigger device performed by the terminal, or possibly reciprocal detection of the terminal and the trigger device.

In case where step a) of the detection comprises the localization of the trigger device by the first terminal, this localization can be realized at least in part by localizing the terminal of one or several radiofrequency or infrared signals emanating from the trigger device. This detection can be realized for example by recognizing said radiofrequency or infrared signals emanating from the trigger device of an identification number ID₂ associated with the trigger device. According to one variation, this localization can be realized at least in part by detection of the presence of the first terminal having an electrical connection between the trigger device and the first terminal.

In case where step a) of the detection comprises the localization of the terminal by the trigger device, this localization can be realized at least in part by detection of presence the trigger device of one or several radiofrequency or infrared signals emanating from the first terminal. This detection can be realized for example by recognizing the identification number associated with the first terminal among said radiofrequency or infrared signals emanating from the terminal.

According to one variation, the localization of the first terminal by the trigger device can be realized at least in part by detecting the trigger device having an electrical connection between the trigger device and the first terminal.

Concerning the disactivation of said communication mode in step b), this can be triggered by the first terminal following the detection of the simultaneous presence of the trigger device and the first terminal.

According to one variation, the disactivation in step b) can be triggered by the first terminal following the reception of a disactivation instruction or one or several sets of data emanating from the trigger device, said data comprising at least one or more data in relation to the disactivation order.

In case where the trigger device is capable of detecting the terminal, said disactivation can be realized by following a disactivation instruction emanating from the trigger device after the detection of the presence of the first terminal is made by the trigger device.

According to a particular realization mode of the present invention, the trigger device is likely to receive the information emanating from an automotive vehicle and the disactivation in step b) of at least one communication mode from the first terminal can be at least dependent upon the detection function made during step a) and said information emanating from the automotive vehicle. Said information emanating from the automotive vehicle can comprise the information in relation to the ignition system of the vehicle and/or information in relation to the on/off state of the motor and/or information in relation to the speed of the vehicle.

This particular realization mode of the present invention can have many applications and permit for example inhibition or disactivation of one or several communication modes of communication terminal when the terminal user is driving the vehicle.

For this particular realization mode, the trigger device can be contained for example in a car kit of a motorized vehicle.

After step b) of disactivation of at least one communication mode of the first terminal, when the first terminal receives the call emanating from the second terminal related to the communication following the disactivated communication mode, the method according to the present invention can comprise in addition, according to the first variation, a step to establish the communication between the first terminal and the second terminal according to the different communication mode from that of the disactivated one.

According to a second variation, the method of the present invention can comprise, in addition, after reception of the call, a step to reject the call related to that communication.

The method according to the present invention can comprise, in addition, before step b), the steps:
- receiving a call of communication request in accordance with a communication mode emanating from a second terminal,
- establishing the communication between said first terminal and said second terminal in accordance with said communication mode, and
- then switching said communication mode with said second terminal to a communication mode different from said disactivated communication mode.

According to one variation, the method according to the present invention can comprise, in addition, before step b), the steps:
- receiving a call of communication request from a second terminal in accordance with one communication mode,
- establishing a communication between said first terminal and said second terminal in accordance with the communication mode, and
- switching said communication mode to a different communication mode from said disactivated communication mode.

According to one variation in which the first terminal has established, before step b), a communication with a second terminal according to the disactivated communication mode, this method can comprise, after step b), the step of switching said communication into another communication in accordance with another communication mode different from said communication mode.

According to another variation in which the first terminal has established, before step b), a communication with a second terminal according to a given communication mode, this method can comprise, after step b), the step of switching said given communication mode to another communication mode.

The present invention concerns also a wireless communication terminal comprising:
- means of communication according to one or several communication modes,
- means for receiving and/or transmitting one or several wireless communication signals emanating from and/or towards a trigger device, and
- means of disactivation of one or several of said communication modes at least depending upon the presence of said trigger device.

The communication terminal can be, for example, a multimedia communication terminal capable of communicating according to one or several cellular communication norms among which at least one is a communication mode of the third generation. Among said communication modes of the communication terminal can be considered a communication mode of videophone.

The present invention concerns also a trigger device of the wireless communication device comprising:
- means for receiving or/and transmitting one or several wireless communication signals emanating from or/and toward a wireless communication terminal, and
- means for generating a disactivation signal, for disactivating one or several communication modes at least depending on the presence of said wireless communication terminal.

The said wireless signals can be the signal according to one of the following norms or the standards: IEEE 802.11a, IEEE 802.11b (WiFi), Bluetooth, Home RF, Hiperlan, IrDA, contact less smart cards.

The trigger device can take many forms. This device can be for example integrated in a car kit of the vehicle, or integrated in an intelligent IC card. The trigger device following the present invention can be used for other applications. For example, it can be used where several communication modes are inhibited, for example, in the place where it is inhibited to film and to perform communication by videophone.

### BRIEF DESCRIPTION OF THE DRAWINGS

The present invention will be more clearly understood by reading the following description of the example of the given embodiment, by way of purely illustrating and non-limiting purpose with reference to the figure, in which:
Fig. 1 and Fig. 2 show respectively a multimedia communication terminal and its associated architecture;
Fig. 3 and Fig. 4 show respectively communication management logic according to the present invention and call management logic according to the present invention; and
Fig. 5, Fig. 6, Fig. 7, and Fig. 8 show different examples of the devices implemented according to the present invention.

The same, similar or equivalent parts of the different figure have the same or similar numerals to facilitate understanding from one figure to the other.

The different parts shown in the figures are not the same scale, to make the figure more legible.

### DESCRIPTION OF THE PREFERRED EMBODIMENT

In the following description, the communication terminals considered are mobile multimedia communication. terminals capable of performing communications by visiophone or videophone, during which these terminals are likely to exchange data intended to reproduce images, especially in movement, and also sounds. By multimedia, it means that these terminals are capable of managing simultaneously several types of digital data related to the sounds and the images and provide to a user these sounds and images.

Communication during which the first terminal and the second terminal exchange the data related to sounds but no digital data related to images are exchanged is called audio communication.

The visiophone or the videophone is the technology that, by integrating the screen and the camera to the communication terminal, permits the interlocutor using these terminals to see each other at the same time as they talk. We hope to include in the word videophone an entire range of communication for which the terminal produces, among others, the images, in particular the moving images in relation to communication. In this manner, for example, the communication during which we perceive on the screen of the terminal of the multimedia communication a moving manifestation of the interlocutor will be considered in the present description as the communication by the videophone.

The present invention is applied for example to the multimedia mobile terminal capable of accessing to a cellular telephone network of the third generation and capable of communication in accordance with the norm for which a service of communication by videophone is provided. The invention concerns for example the user equipment (UE: User Equipment) of the UMTS (Universal Mobile Telecommunication System) network.

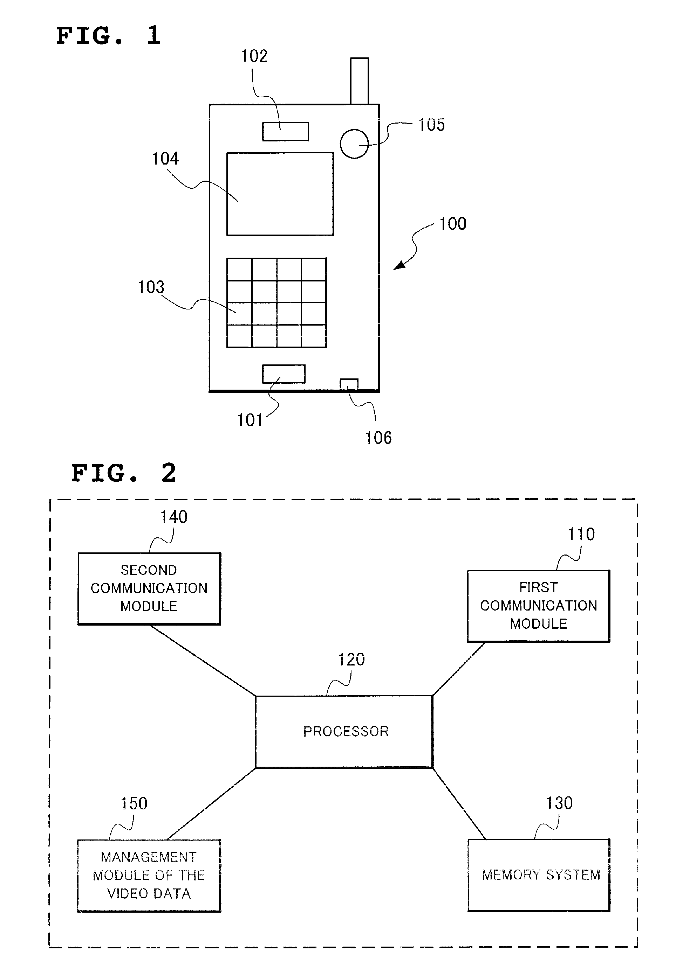

An example of such multimedia communication terminal 100 is shown in Fig. 1. This communication terminal 100 is equipped with especially a micro 101, a speaker 102, a keyboard 103, screen 104, a camera 105, and a power source connector 106 capable of connecting the terminal to a power source.

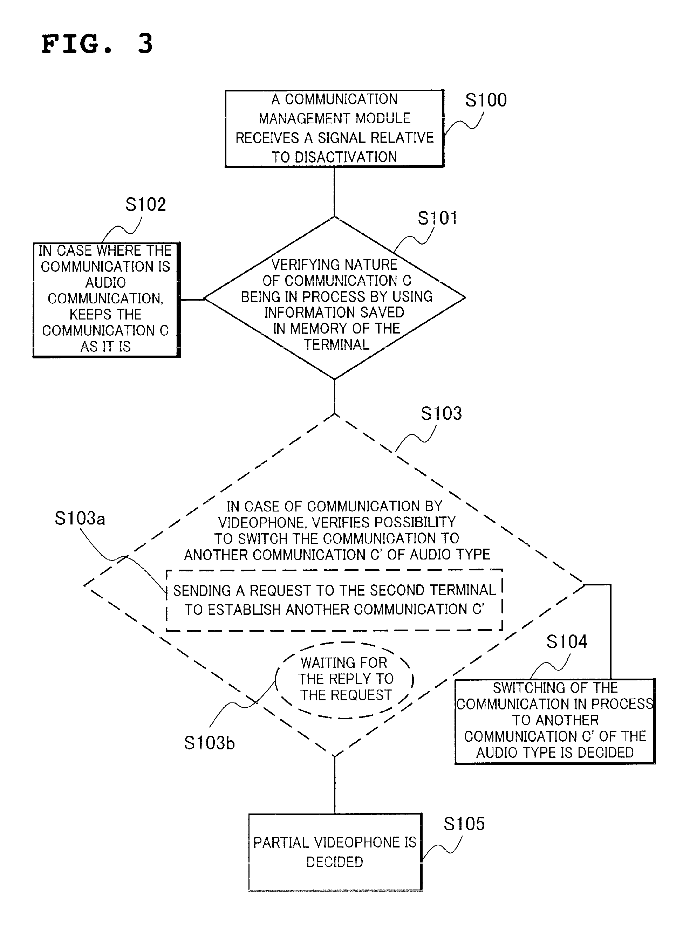

An example of architecture of such terminal is illustrated in Fig. 2. This architecture comprises especially a first communication module 110 permitting exchange of the data with other communication terminal according to one or several cellular communication norms and to access to one or several cellular communication networks, for example, at least to a network of type UMTS and possibly to the network of type GSM (Global System for Mobile Communications).

The terminal 100 is equipped with, in addition, a processor 120 and a set of memory 130, and among them included are at least a program memory, a data memory, and a mass memory. Several memories of this set of memory can belong to a USIM (Universal Subscriber Identity Module) card. The terminal 100 can comprise also a second communication module 140 that permits exchange of the data according to one wireless communication norm with other devices, that is different from that provided for the first module, for example, one norm or standard selected among the following: IEEE 802.11a, IEEE 802.11b (WiFi), Bluetooth, Home RF, Hiperlan, IrDA, contactless smart cards. The terminal 100 can possibly be equipped in addition with a management module of video data 150, permitting processing of especially the signals emanating from the camera 105 and processing of other signals intended to the screen 104.

Thus, such a terminal 100 can be equipped with the function of videophone, that means, it can be capable of receiving the call in relation to the communication by videophone and of performing the communication by videophone.

In certain circumstances, or situations, it may become apparent that the usage of this function is inappropriate, for the user of such terminal, for example, when said user finds himself/herself in the place where it is inhibited to film or while driving.

In this way, a mobile communication terminal according to the present invention can be implemented so that, in certain circumstances, for example, after the terminal detects or receives a signal that we call "disactivation signal", it can disactivate or inhibit in part or totally its videophone function.

An example of the communication management logic that can be implemented in the framework of the present invention will now be described in relation with the Fig. 3. The integrated means to a terminal of the terminal type 100 described above, such as the processor 120 and one or several memories of memory set 130 can be programmed or especially programmed in order to implement such logic.

A multimedia communication terminal implemented according to the present invention is in the process of communication C by videophone with a second terminal, when the first terminal receives or detects a signal indicating its videophone function to be disactivated or, as will be explained below, detects one or several conditions, for example, such as the simultaneous presence or the proximity of the certain means, leading also disactivation of videophone function.

A communication management module of said first terminal receives then a signal relative to this disactivation (step S100). The communication management module can then verify the nature of the communication C being in process (step S101), for example, by using the information exchanged with the second terminal during the establishment phase of said communication C and that could have been saved in the memory of the terminal 100.

In where the communication in process is audio communication, the communication management module keeps the communication C as it is (step S102).

In case where the communication in process is communication by videophone, the communication management module can then verify the possibility to switch this communication to another communication C' of audio type (step S103). This verification can be performed for example at first by a first step to send away a request intended especially to the second terminal to establish another communication C' of different type from the communication C in process (step S103a), for example, a request for the audio communication. Afterwards, a step of waiting for the reply to this request can be provided (step S103b).

According to a first possibility, switching of the communication in process to another communication C' of the audio type can be decided (step S104).

According to another possibility, the communication by videophone in process can become the communication so called "partial videophone" (step S105).

When the communication by videophone becomes partial, the screen 104 of the terminal 100 stops producing images, especially in movement, but the speaker 102 can continue to produce sounds. The terminal 100 can also stop providing the information relative to the moving image to another terminal with which it is in process of communication.

The switching of the communication C in process to the communication by partial videophone can be performed with several ways.

It can be performed according to one variation by turning off the power of the screen 104 and possibly the camera 105 of the first terminal 100. This or these poweroffs can be managed for example by the processor 120, especially by means of one or several signals sent to one or several circuits that drive the screen 104 or/and the camera 105 of the terminal 100. This poweroff of the screen or/and the camera is performed without cutting the communication.

According to another variation, in the case in which the terminal comprises a management module of the video data 150, the change from the communication C by videophone to the communication by partial videophone can be performed, with the partial or total disactivation of the management module of the video 150 in the way that the possible signals relative to the moving images intended to the screen 104 do not come to the screen and possibly in the way that the possible signals related to the moving images emanating from the camera 105 are not processed.

In this manner, we understand by the partial videophone communication that the establishment of the communication between the first terminal and at least one second terminal is similar to that of the classical communication by videophone but that the first or/and the second terminal stop producing the moving images. A telephone communication whose establishment is similar to that of classical videophone communication between the first multimedia terminal and the second multimedia terminal and for which at least one of the two terminals stops transferring the data intended to reproduce the moving image to the other can be considered as the partial videophone communication.

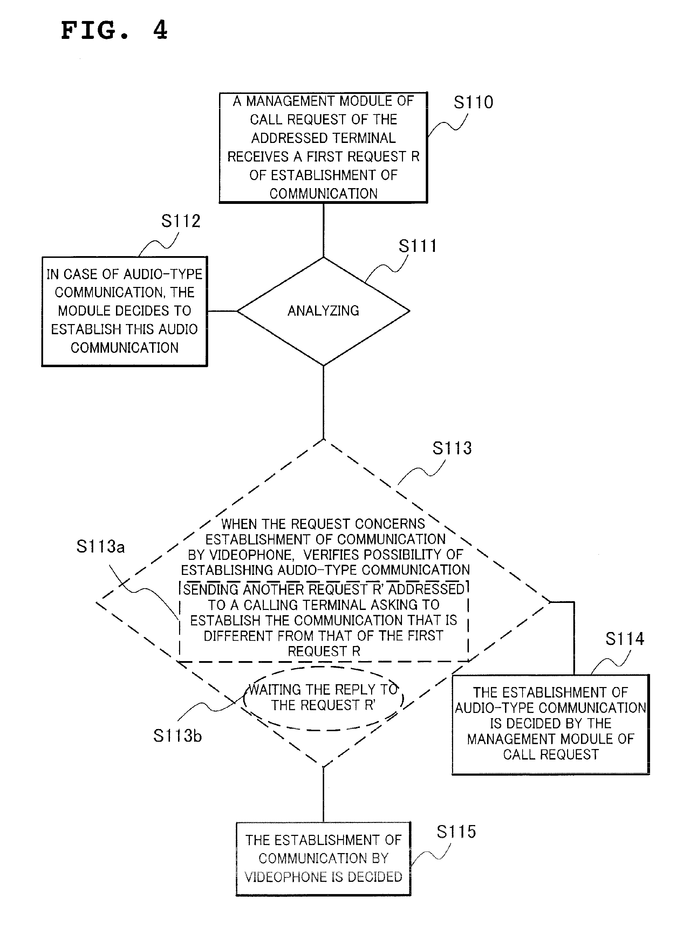

An example of management logic of call request that can be performed in the framework of the present invention will be described in relation to Fig. 4. The integrated means in the terminal of the type of terminal 100 such as the processor 120 and one or several memories of the memory set 130 can be specially programmed to perform this management logic of call.

A calling terminal wishes to establish communication by visiophone or videophone with an addressed terminal according to the present invention, but the addressed terminal has detected or received beforehand a signal indicating its videophone function to be disactivated, or has, as will be explained below, detected one or several conditions, for example, such as the simultaneous presence or the proximity of certain means, leading also to the disactivation of the videophone function.

A management module of call request of the addressed terminal receives then a first request R of establishment of communication (step S110), formulated according to the defined protocol, whose analysis (S111) permits the management module of call to determine the type of the requested communication, for example, if it is a communication by videophone or simple audio communication.

In case where the request R concerns audio-type communication, said module decides to establish this audio communication (step S112). In case where the request concerns the establishment of the communication by videophone, the management module of call request verifies the possibility of establishing the audio-type communication instead of the communication by videophone (step S113).

This verification can be performed for example at first by the first step of sending another request R' addressed especially to a calling terminal asking to establish the communication that is different from that of the first request R (step S113a). This other request R' can concern then for example audio communication or communication by videophone that we call "partial". A step of waiting the reply to the request R' (step S113b) can then be provided.

According to a first possibility, the establishment of audio-type communication can be decided by the management module of call request (step S114); according to another possibility, the establishment of communication by videophone can be decided (S115). In case where communication by videophone is established, the communication management module described above can transform this communication to the communication by partial videophone immediately or in the certain period of time after the establishment of the communication.

The partial or total disactivation of the videophone function of the multimedia communication terminal such as performed according to the present invention can be provoked by the signals that we call "trigger" emanating from the exterior device that we call "trigger device". At least some of those signals can be the infrared or radiofrequency signals according to one of the following communication norms or standards: IEEE 802.11a, IEEE 802.11b (WiFi), Bluetooth, Home RF, Hiperlan, IrDA, contactless smart cards. Thus at least a fraction of the signals can be transmitted to the second communication module of the terminal 100.

Such a trigger device can be provided in the places where we wish to prohibit the user of the multimedia communication terminal to use the videophone, for example, in the place such as a company or a factory which it is forbidden to film.

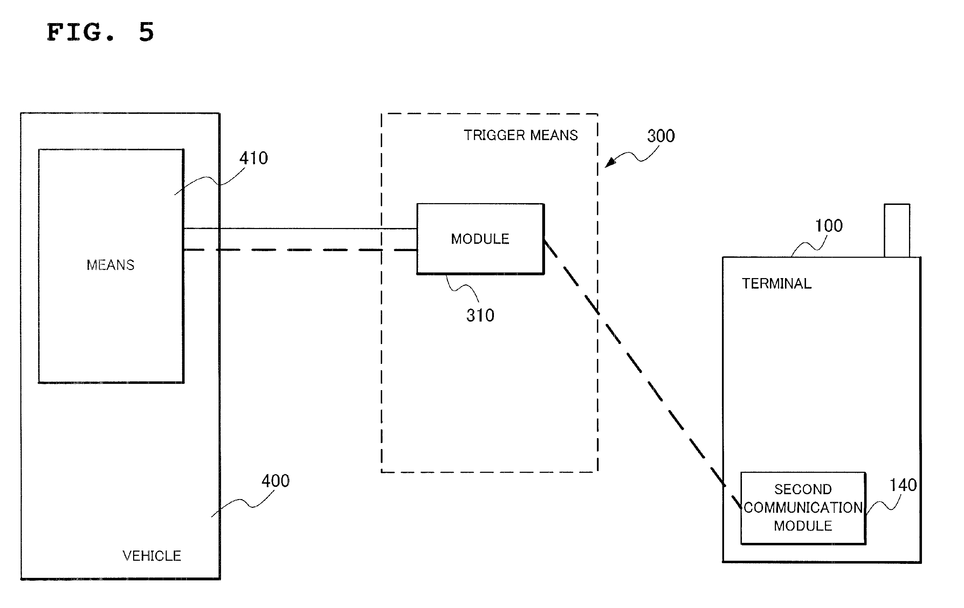

Figs. 5 - 8 illustrate the variations of performing the example of the device according to the present invention. The device comprises the means 300 permitting to trigger, in the direct or indirect ways and in the certain circumstances, the disactivation of the videophone function of the multimedia communication terminal of the type 100 described above.

Such a device comprises at first a module 310, permitting transmission of the data via a wireless connection (said connection being shown in dotted line on Fig. 5 between the bloc 310 and the bloc 140) to the second communication module 140 of communication terminal 100.

The module 310 and the second communication module 140 of the terminal 100 can exchange the data, for example, according to the following one or several wireless communication norms or standards: IEEE 802.11, IEEE 802.11b (WiFi), Bluetooth, Home RF, Hiperlan, IrDA, contactless smart cards. The module 310 constitutes one part of the means 300 such as, for example, a Bluetooth module of a car kit or an automobile kit of the automobile likely to exchange the data at a frequency near 2.45 GHz with the second communication module 140 of the terminal 100. The module 310 can be formed by the transmitting and receiving means of a discrete component as well as, for example, by a processor or memory system that can be, for example, assembled by integration on one same chip. According to another example, the module 310 can be for example an intelligent IC card capable to exchange the data with the second communication module 140 of the terminal 100.

The second communication module 140 of the terminal 100 and the module 310 can be respectively associated with the first number or identification code ID₁ and the second number or identification code ID₂. In the case, for example, where these two modules can exchange the data according to the Bluetooth norms, the identification numbers ID₁ and ID₂ can be the Bluetooth identification number encoded by 32 bits.

A pairing of the terminal 100 and the trigger means 300 can be arranged in advance, so that the second module 140 of the terminal 100 and the module 310 can exchange respectively the numbers or identification codes ID₁ and ID₂ to allow the terminal 100 and the trigger means 300 to identify mutually. This pairing can at least allow the terminal 100 to register in the memory system 130 the identification number ID₂ of the module 310 and possibly the module 310 to register in the memory system the identification number ID₁ of the terminal 100.

Once the mutual recognition is performed, the pairing will allow, for example, for the terminal 100, when the terminal 100 receives the RF signals according to Bluetooth norm, to identify the signals emanating from the module 310 and identify thus the trigger means 300 among the several devices capable of communicating according to the Bluetooth norm.

This pairing also will allow the module 310 to identify, when it receives for example the RF signals according to Bluetooth norm, the signals emanating from the second module 140 of the terminal 100 and identify thus the terminal 100 among the several devices capable of communicating according to Bluetooth norm.

The module 310 can be in addition provided to receive the information emanating from a motorized vehicle 400. We understand with the word of motorized vehicle 400 all types of motorized machines intended to transport or carry persons, object or goods. The motorized vehicle can be, for example, an automobile.

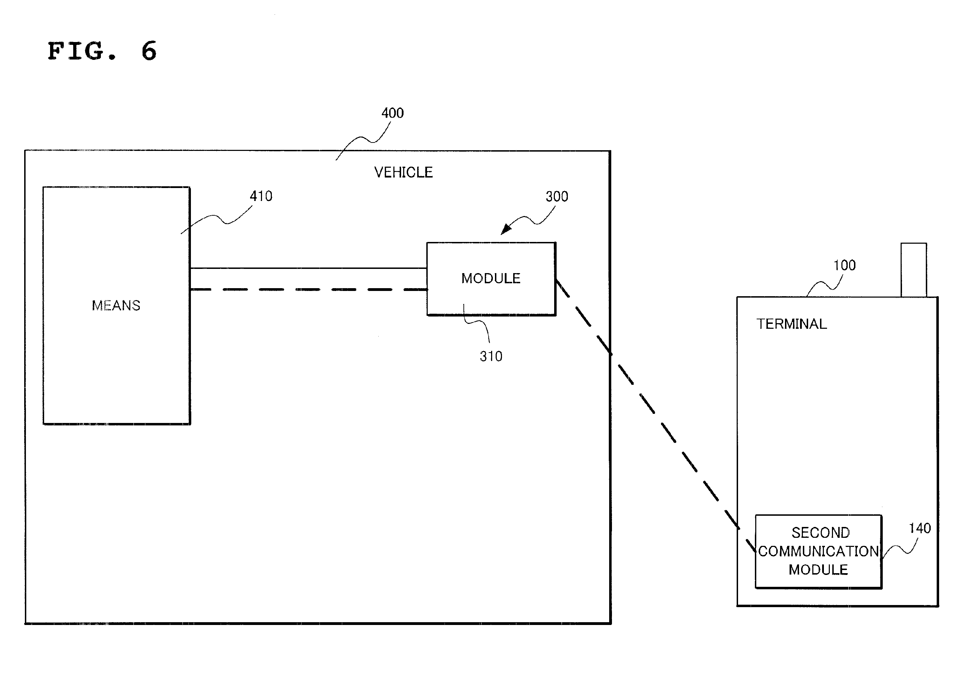

According to one variation illustrated in Fig. 5, the module 310 can be independent of the vehicle 400. According to another variation illustrated in Fig. 6, the module 310 can be integrated or/and loaded in the vehicle 400.

In the two cases, said information emanating from the motorized vehicle 400 and supplied to the module 310 are issued from the means marked 410 that are integrated or/and connected to the vehicle 400. The means 410 can be in the form of, for example, one or several electric circuits or/and an electronic device or/and an information platform loaded in the vehicle 400.

The information supplied by the means 410 to the module 310 can be forwarded via a wireless connection, radio frequency or infrared or/and via an electrical connection with the module 310 (the radio frequency connection being presented on Fig. 5 to Fig. 7 by the dotted line joining the block marked 410 and the block marked 310, and the electrical connection being, in its case, presented on the same figure by the solid line joining the same blocks).

In the case where the information emanating from the vehicle 400 is forwarded via a wireless connection, radio frequency of infrared ray to the module 310, the means 410 comprises at least a transmitting unit or the transmitting/receiving unit of electromagnetic signals, for example a unit permitting to transmit RF signals according to Bluetooth norm.

Among said information supplied to the module 310 by the means 410 integrated in the vehicle 400, there appears at least the information in relation to the on/off state of the switching system. The other information such as, for example, the information in relation to the on/off state of the ignition system or the on/off state of the motor of the vehicle 400, that means if the motor is on or off, and possibly the information in relation to the speed of the vehicle 400, can also be transmitted to the module 310 by the means 410.

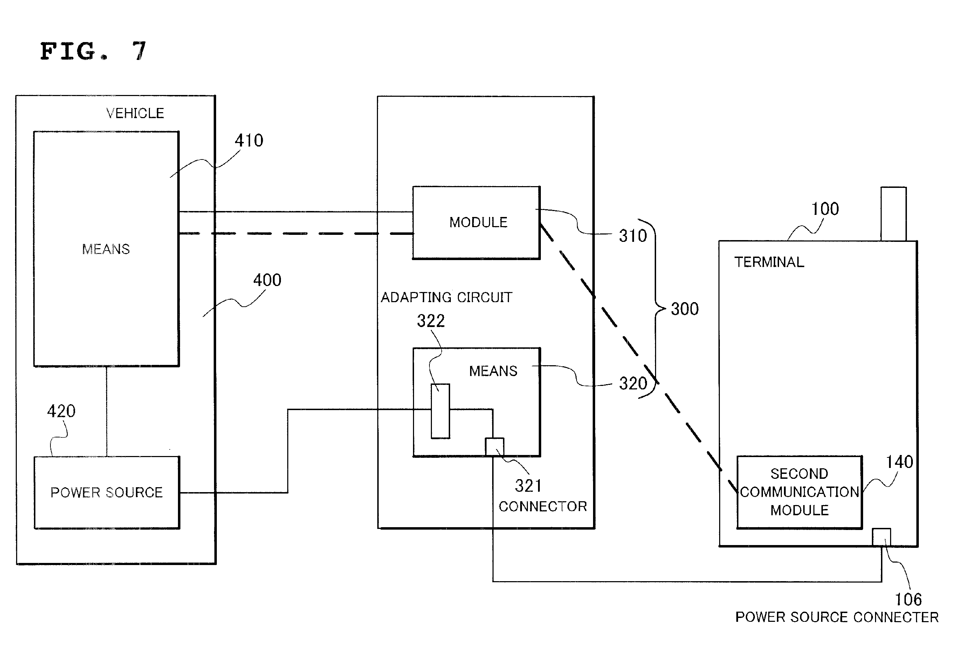

According to one particular realization mode of the device, the trigger means 300 can comprise the means 320 capable of supplying power to the terminal 100 and is likely to connect the power to the power source marked 420 integrated in the vehicle 400 (Fig. 7).

The means 320 can comprise especially at least a connector 321 likely to be connected directly or through a cable to the connector of the power source 106 of the terminal 100. The means 320 capable of supplying the power to the terminal 100 can comprise also an adapting circuit 322 to adapt to the terminal 100 the current supplied by said power source 420 of the vehicle 400.
For example, in case where the vehicle 400 is an automobile, said adapting circuit comprised in the means 320 can be the adaptor of cigar lighter.

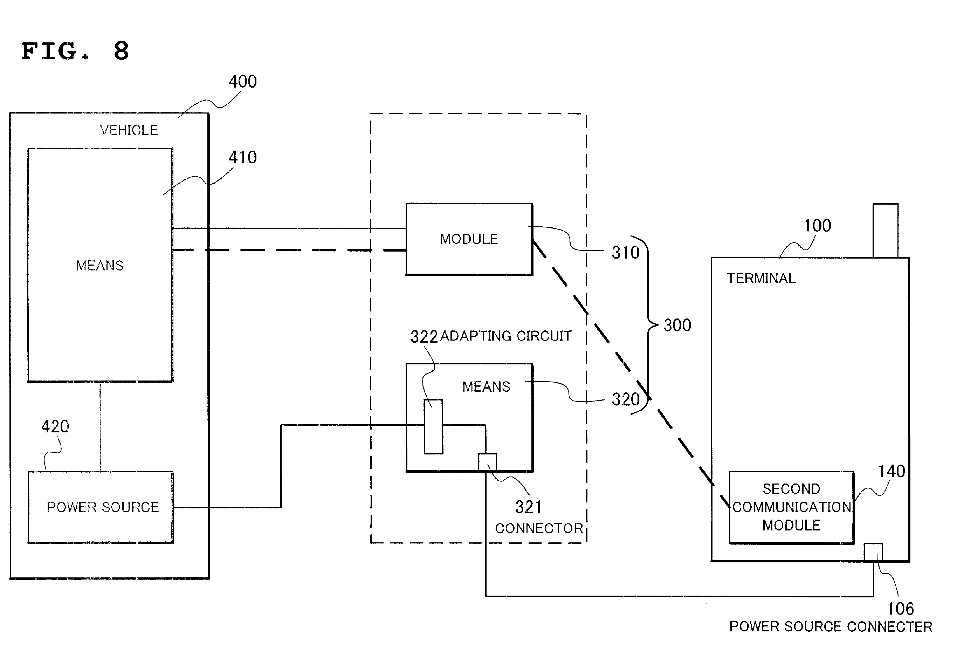

According to several possibilities, the means 320 and the module 310 can be independent (Fig. 8) or connected together and belong to the same device (Fig. 7).

A device such as described above can, according to several variations of the situation, allows disactivating automatically the videophone function of the communication terminal 100.

For example, the videophone function of the terminal can be disactivated automatically with the condition that the terminal finds itself near the means 300, that is the distance between the terminal 100 and the means 300 is less than several meter or several tens of centimeter, for example, less than 5m or 3m or 2m or 1m or 0.5m.

That can be realized if, by "Bluetooth" communication, the means 300 and the means 100 detect their presence reciprocally.

Consequently, when the means 300 is contained in the automobile vehicle, the videophone function can be disactivated as soon as the terminal 100 finds itself at the proximity of the vehicle, at the distance less than several meter or several tens of centimeter, for example less than 5m or 3m or 2m or 1m or 0.5m.

According to the other example, concerning an automobile vehicle, when the terminal 100 is in the vehicle or at the proximity of the vehicle, the videophone function can be disactivated as soon as the switch of the vehicle 400 is turned on, or for example again under the condition that the motor engine of the vehicle 400 is turned on, and/or, for example, under the condition that the speed of the vehicle is not zero.

According to another example, the videophone function of the terminal 100 can be disactivated under the condition that the terminal 100 is connected to the means 320 permitting connection of the terminal 100 to the power source 420 integrated to the vehicle 400 or/and under the condition that the terminal 100 finds itself at the proximity of the module 310.

An example of the function of the device described above bringing to the disactivation of the videophone function of the terminal 100 will be now described.

In this example of the function, the videophone function of the terminal 100 can be disactivated on the condition at first that the terminal 100 has detected in advance the presence of or at the proximity of the trigger means 300.

In case where the trigger means 300 are provided with the means 320 capable of supplying the power to the terminal 100 described above, the detection can consist of detection of one or several electrical signals S₁ at the position of the power source connecter 106 of the terminal 100. In the particular mode of realization for example, where the trigger mean 300 is integrated in a car kit, said electrical signal S₁ can be the specific signal of the car kit that the terminal 100 is easily to recognize.

The module 310 can be designed or programmed to be able to transmit in the periodical manner the signals S₂ of radiofrequency or infrared signals emanated to the terminal 100, preferably according to one of the wireless communication norms described above, for example, according to Bluetooth norm. The detection of the trigger device 300 by the terminal 100 can then consist of detection of radiofrequency or infrared signals emanating from the module 310 and, for example, detection of the identification code ID₂ among the signals.

It can also be provided that the detection of the module 310 or/and the module 320 by the terminal 100 is the trigger element of the disactivation of the videophone function. In this case, following the detection of the module 310 or/and the module 320, the terminal 100 disactivate its videophone function.

There can also be provided another case where the detection of the trigger means 300 by the terminal 100 is simply an element permitting the inhibition or the disactivation, as explained in relation to Fig. 1 and Fig. 2 with regard to the videophone function of the terminal 100.

This disactivation or the inhibition can be triggered, after the terminal 100 has in advance detected the trigger means 300, then for example as soon as the module 310 receives the signals indicating that the contact of vehicle is on or possibly as soon as the module 310 receives the information emanating from the means 410 indicating that the motor of the vehicle is on or/and that the speed of the vehicle is not zero. When the module 310 receives said information, the module 310 can then process this information and send a signal of disactivation addressed to the terminal 100. According to one variation, when the module 310 receives said information, the module 310 can transmit it to the terminal 100 and the terminal interprets this information and triggers the disactivation of its videophone function.

According to the second example of the function of the above-described device, the videophone can be disactivated on the condition at first that the trigger means 300 has detected in advance the terminal 100. In case where the terminal 100 and the trigger means 300 are arranged to be electrically connectable, the detection of the terminal 100 by the trigger means 300 can be performed by detecting the electrical signal S'₁ emanating from the terminal 100, for example, the signals emanating from the power connector 106 of the latter, and/or, possibly by detecting one or several other signals S'₂, for example, the radiofrequency or infrared signals emanating from the second communication module 140 of the terminal 100 and containing the identification code ID₁.

In case where the trigger means 300 and the terminal 100 are not arranged for being able to be connected electrically or/and are not connected electrically, the terminal 100 can be arranged, for example, for being able to transmit in the periodic manner the radiofrequency or infrared signals S'₂, emanated to the terminal 300, preferably the signals according to one of the wireless communication norms described above, for example, according to the Bluetooth norm. The trigger means 300 can then identify the terminal 100 when it detects the identification number ID₁ from the trigger means 300 among the signals S'₂.

It can be provided that the detection of the presence of the terminal 100 by the trigger means 300 is the trigger element of the disactivation of the videophone function.

Thus, following the detection of the presence of the terminal 100, the trigger means 300 can, for example, disactivate the videophone function of the terminal 100, sending to the terminal 100 one or several signals instructing this disactivation.

The simultaneous presence, or the presence at the proximity with the distance less than several meters, for example, 10m or 5m or 2m or 1m, can result in the disactivation of the communication mode, especially the disactivation of the communication mode by videophone.

It can be also provided that the detection of the terminal 100 by the trigger means 300, therefore the simultaneous presence of the means 30 and the terminal 100, is one element permitting triggering of the disactivation of the videophone function of the terminal 100.

Thus the disactivation of the videophone function of the terminal 100 can be triggered after the detection by the means 300, for example, as soon as this means 300 receives the signals emanating from the means 410 of the vehicle 400, indicating that the switch of the vehicle is turned on or possibly indicating that the motor engine of the vehicle is on or/and that the speed of the vehicle is not zero.

According to a third example of the function of such system, the detection between the means 300 and the terminal 100 can be mutual. This detection can then be performed, for example, as soon as the terminal 100 detects the identification number ID₂ or/and the trigger means 300 detects the identification number ID₁ among the signals that the terminal 100 can emanate. The disactivation of the videophone function can then possibly be performed by the device 250 as soon as the device 250 detects the presence of the terminal 100 or as soon as the terminal 100 detects the presence of the trigger means 300.

According to the explanation described above, the disactivation of a communication mode has been described.

The present invention is not limited to the disactivation of the videophone function, and it can be applied also to the disactivation of one or several other modes of communication, for example, an audio communication mode, in a manner similar to the explanation described above.

## Claims

1. A method for processing communications modes of a first mobile communication terminal (100) adapted for exchanging data with other terminals following one or several cellular communication standards, including the following steps:
a) detecting a simultaneous presence of the first mobile communication terminal (100) and of an exterior trigger device (300), detecting being made at least partly by a detection of the presence of the trigger device (300) by the first terminal (100), and at least partly by a detection of the presence of the first terminal (100) by the trigger device (300), and
b) deactivation of One communication mode, at least, of the first terminal (100) at least according to the detection made during the step a).

2. A method for processing communication modes of a first terminal mobile communication (100) according to claim 1,
said exterior trigger device (300) being adapted for communication with the first terminal (100) following one or several wireless communication norms or standards different from said cellular communication standards.

3. A method, according to claim 1 or claim 2, including in addition after the step b) the following steps:
reception from a second terminal of a call relating to a communication following to the deactivated Communication mode, and
establishing a communication between said first terminal (100) and said second terminal according to a different communication mode from the deactivated communication mode.

4. A method according to claim 1 or claim 2, including in addition after the step b) the following steps:
receiving a call coming from a second terminal in relation to a communication following the deactivated communication mode, and
rejecting the call in relation to said communication.

5. A method according to any one of claims 1 to 4, further comprising before step b) the steps:
receiving a call coming from a second terminal in relation to a communication request following a communication mode,
establishing of a communication between said first terminal (100) and second terminal following said communication mode,
deactivation in conformity with step b) of the said communication mode, and
commutation of said communication to an other communication with said second terminal according to a communication mode different from said deactivated communication mode.

6. A method according to any one of claims 1 to 4, further comprising before step b) the steps:
reception of call coming from a second terminal in relation to a communication request following a communication mode,
establishing of a communication between said first terminal (100) and said second terminal following said communication mode,
then deactivation in conformity with step b) of said communication mode, and
transformation of communication mode into a communication mode different from said communication mode.

7. A method according to claim 1 or claim 2, in which the first terminal (100) has established before step b) a communication with the second terminal according to the deactivated communication mode,
further including, after the step b) the step:
commutation of said communication into an other communication following an other communication mode different from said communication mode.

8. A method according to of claim 1 or claim 2, in which the first terminal (100) has established before the step b) a communication with a second terminal following a given communication mode,
comprising in addition after the step b) the step:
transforming of said given communication mode into an other communication mode.

9. A method for processing communication modes from a first mobile communication terminal (100) adapted for exchanging data with other communication terminals following one or several cellular communication norms, comprising the following steps:
a) detection of simultaneous presence of the first mobile communication terminal (100) and of an exterior trigger device (300) adapted for communicate with the first terminal (100) following one or several wireless communications norms or standards of said communications norms,
b) deactivation at least of one communication mode of the first terminal (100) at least according to the detection made during the step a), the process comprising in addition, before or after step b):
a reception step of one call coming from a second terminal relating to a request following a communication mode,
a step of communication establishment between said first terminal and a second terminal following said communication mode, and
a step of commutation after the step b) of said communication to an other communication with said second terminal following a communication mode different from said deactivated communication mode.

10. A method according to any one of claims 1 to 9, in which the exterior trigger device (300) is adapted to communicate with the first terminal (100) following one or several wireless communication norms or standards different from said cellular communication norms, said communication norms or standards being chosen from one of the following communication standards: IEEE 802.11a, IEEE 802.11b (WiFi), Bluetooth, Home RF, Hiperlan, IrDA, contactless smart cards.

11. A method according to any one of claims 9 to 10, wherein step a) is realized at least in part by detection of the presence of trigger device (300) by the first terminal (100).

12. A method according to any of claims 9 to 10, wherein step a) is realized at least in part by detection of the presence of trigger device (300) by the first terminal (100), said detection of the presence of trigger device (300) by the first terminal (100) is realized at least in part by identification by the terminal of one or several radiofrequency infrared signals emanating from the trigger device.

13. A method according to claim 12, the location realized by recognition among said radiofrequency or infrared signals emanating from the trigger device (300) of an identification number associated with the trigger device.

14. A method according to any one of claims 1 to 13, wherein the step a) is realized at least in part by the detection of trigger device (300) presence by the first terminal (100), said detection following the step a) being realized at least in part by location, by the first terminal (100) of an electrical connection between the trigger device (300) and the first terminal (100).

15. A method according to any one of claims 9 to 14, wherein the step a) is realized at least in part by a detection of the presence of the first terminal (100) by the trigger device (300).

16. A method according to any one of claims 1 to 15, wherein the step a)is realized at least in part by the detection of the presence of the first terminal (100) by the trigger device (300), said detection of the first terminal (100) by the trigger device (300) being realized at least in part by the location of said trigger device (300) of one or several radiofrequency or infrared signals emanating from the first terminal (100).

17. A method according to claim 16, the location is realized by recognition among said radiofrequency or infrared signals emanating from the first terminal (100) of an identification number associated with the first terminal.

18. A method according to any one of claims 1 to 17, wherein the step a) is realized at least in part by a detection of the presence of the first terminal (100) by the trigger device (300), said detection of the first terminal (100) by the trigger device (300) being realized at least in part by location by said trigger device (300) of an electrical connection between the trigger device (300) and the first terminal (100).

19. A method according to any one of claims 1 to 18, wherein the step a) is realized at least in part by a detection of the presence of the trigger device (300) by the first terminal (100), the deactivation of said communication mode at the step b) being initiated by the first terminal (100) as a result of the detection of the simultaneous presence of the trigger device (300) and the first terminal (100).

20. A method according to any one of claims 1 to 19, wherein the step a) is realized by a detection of the presence of the first terminal (100) by the trigger device (300), the deactivation of said communication mode at step b) being initiated by the first terminal (100) as a result of the reception by the latter of a deactivation instruction or of one or several data coming from the trigger device (300), which data comprising at least one element relating to a deactivation order.

21. A method according to any one of claims 1 to 20, wherein the step a) is realized at least in part by the detection of the presence of the first terminal (100) by the trigger device (300), one order have been emitted by the trigger device as a result of the detection by this one of the presence of the first terminal (100).

22. A method according to any one of claims 1 to 21, wherein the trigger device could receive information coming from a motorized vehicle, the deactivation at the step b) of, at least, one communication mode of the first terminal (100) varying at least according to the detection made during the step a) and to the information coming from the vehicle.

23. A method according to claim 22, wherein said information comprising at least one information relating to the switching on status of the contact of the vehicle or/and at least one information relating to the switching on status of the vehicle engine or/and at least one information relating to the vehicle speed.

24. A method according to any one of claims 1 to 23, wherein the trigger device being included in a motorized vehicle car kit.

25. A wireless communication terminal (100) comprising:
means of Communication (110) according to one or several communications modes and following one or several cellular communication norms,
means for receiving or/and emitting one or several wireless communication signals different from said cellular communication norms emanating from or/and towards a trigger device,
means for deactivating one or several of said communication modes at least depending upon of a trigger device, and
means for commuting a communication by videophony to audio communication according to the presence of a trigger device.

26. A terminal according to claim 25, wherein the presence of said trigger device is identified by reception, by the wireless communication terminal (100) of one or several Radiofrequency or infrared signals emitted by the trigger device (300).

27. A terminal according to claim 26, wherein the presence of said trigger device (300) is identified by reception , by the wireless communication terminal (100) of an identification number ID2 associated with the trigger device.

28. A terminal according to any one of claims 25 to 27, wherein he presence of said trigger device (300) is located by an electrical connection between the trigger device (300) and the wireless communication terminal (100).

29. A terminal according to any one of claims 25 to 28, wherein the deactivation occurs following the reception of a deactivation signal.

30. A terminal according to claim 29, wherein the deactivation signal emanates from the trigger device (300)
